Europäisches Patentamt

(19) European Patent Office

Office européen des brevets

(11) Publication number: **0 106 210**
**A1**

(12) # EUROPEAN PATENT APPLICATION

(21) Application number: **83109449.5**

(22) Date of filing: **22.09.83**

(51) Int. Cl.³: **B 01 D 53/36**
**F 27 D 17/00**

(30) Priority: **30.09.82 US 429338**

(43) Date of publication of application:
**25.04.84 Bulletin 84/17**

(84) Designated Contracting States:
**DE FR GB IT SE**

(71) Applicant: **UOP Inc.**
**10 UOP Plaza Algonquin & Mt. Prospect Roads**
**Des Plaines Illinois 60016(US)**

(72) Inventor: **Weir, William Raymond**
**2600 Grouse Lane**
**Rolling Meadows, Illinois 60008(US)**

(72) Inventor: **Brewer, Gerald LeDon**
**712 West Dempster Street**
**Mount Prospect, Illinois 60056(US)**

(74) Representative: **Weber, Dieter, Dr. et al,**
**Dr. Dieter Weber und Klaus Seiffert Patentanwälte**
**Gustav-Freytag-Strasse 25**
**D-6200 Wiesbaden 1(DE)**

(54) Catalytic apparatus for surface coating curing oven.

(57) Improved catalytic apparatus for use in surface coating processes utilizing combustible hydrocarbon solvents mounts a pair of ceramic honeycomb monolith members (11,12) having at least 200 cells per square inch (0.31 cells square millimeter) at angles relative to each other and relative to a housing (22) and a flow detector (38). The mounting is such that the heat developed by the monolith members will create radiant energy zones both before and after the catalyst. The angles used and the presence of the deflector will increase the residence time of the fumes and any coating particulates in them as compared to prior art devices where the fumes contact a series of spaced parallel screens. The apparatus prevents the clogging one would expect when using such a small cell size. It also uses less ceramic and catalyst and provides a lower pressure drop than the known prior art devices.

EP 0 106 210 A1

INCOMPLETE DOCUMENT

## BACKGROUND OF THE INVENTION

The invention relates to catalysts of the type placed, since the mid-1950's, in oven heaters to burn and/or oxidize the combustible hydrocarbon solvents being vaporized from the surface coatings that are cured in the ovens. Such oven heaters have been used extensively in the automotive industry to cure paints and primers applied to automobile bodies and parts. The catalysts provided heat for recovery to the process as well as decontamination of the process atmosphere and its exhaust. They also prevented condensate from forming in the cooler outside containment areas of the ovens.

As new improved coatings were developed and production rates were increased, these ovens were required to operate at higher and higher temperatures. This increased the rate at which energy was transferred to the coatings on the product. This also accelerated the rate at which coating solids were lost from the product coating into the oven atmosphere. These solids are the materials in the coating that, at normal temperatures, would not be lost from the formulations. They include resins, vehicles and pigments.

The mat type catalyst form originally used acted as an impingement filter and the active surfaces became coated and fouled with solids. Covered catalytic surfaces cannot perform the function of oxidizing the vaporized combustible hydrocarbon solvents.

Several different physical forms of diffusion type catalysts were developed to overcome this problem. The active catalyst surfaces were oriented parallel and not perpendicular to the flow of the gases.

Thus the vapors could diffuse to the active surfaces and a particle would not impinge upon the surfaces. The diffusion structure development involved a fabricated part that resembled a honeycomb or corrugated matrix. Since its ratio of geometric surface area to volume was about the same in comparison to the mat catalysts, but unit resistance to flow was lower, designs evolved that presented less facial area to the flow but had much greater depths. This also increased the residence time of the gases in the catalyst, but, since the fabricated cell size was rather large, it imposed no great penalty in terms of resistance to flow. At that time, ceramic honeycomb materials offered many advantages over fabricated metal forms and this was the predominate material utilized. Literally, thousands of these catalysts were installed during the ensuing years, the primary application being in heaters for ovens curing the paint on automobile bodies and parts. Cell sizes in the range of 50 to 120 per square inch of face area (0.08 to 0.19 per square millimeter) became common, and the element was usually built up with 9 to 12, 1" thick layers (25.4 mm) which have a flow face about 12" square ($0.019 \text{ mm}^2$).

With the advent of control regulations for automotive engine exhaust gases in the early 1970's, great strides were made in the development of these ceramic honeycomb structures. The goals were to reduce the overall size, maximize surface area and minimize weight. This was primarily achieved by close tolerance extrusion techniques and the product was called a monolith, rather than a fabricated honeycomb. Cell densities of 400 per square inch of face area (0.62 per square millimeter of face area) with very thin cell walls are now common, achieving high relative surface area ratios to overall size and weight. The monolith extrusion is cut to any desired length and depths normally run from 3 to 7 inches (76.2 to 177.8 mm). Prices have also been lowered by the extrusion technique and the high production volumes for auto exhausts has further lowered unit costs. The penalty with the monolith is a higher resistance to flow of the gases through the material.

Although, at first blush, it might appear obvious to consider replacing older monoliths with large openings with the newer lower cost units with small openings, several requirements would have to be met. To fit into the same place in existing ovens, the replacement could not exceed the face size of the old honeycomb module. It could not have a higher resistance to flow. And, lastly, it would have to minimize the potential for plugging the smaller flow channels with particulate paint solids. To locate a monolith with openings of 200 or more per square inch (0.31 or more per square millimeter) in place of existing monoliths which have fumes impinging directly into their flow channels would certainly not solve the problems of increased resistance to flow or plugging of openings.

## SUMMARY OF THE INVENTION

It is among the objects of the present invention to provide a catalytic apparatus for a surface finish curing oven which can utilize available, automotive type catalyst coated monoliths with a cell size previously thought to be much too small to be kept from plugging.

Another object is to provide such an apparatus which uses less ceramic substrate and less catalyst than normally used.

Yet another object is to provide such an apparatus which will reduce the possibility of particulate matter being returned to the atmosphere.

These and other objects are attained by the apparatus of the present invention wherein a pair of generally rectangular, catalyst coated monolith members are arranged in a V-shaped configuration with the base of the "V" in the center of the inlet opening of the housing and with the upper ends of the "V" located at the downstream end of the housing. A metal frame around each of the monolith members is welded to a flow

deflector element at the inlet end of the housing and to the outer walls of the housing near the outlet end. The angle of the "V" is preferably in the range of about 20° to 90° and, since the housing has a rectangular cross-section, the angle formed between each monolith and the outer housing wall is about 50% of the included angle of the "V". As compared to conventional arrangements where the monolith is perpendicular to the flow axis, the V arrangement permits the facial area of the catalyst exposed to the gas flow to be increased by an amount which is limited only by the depth of the frame and the thickness of the monolith. This increase in facial area lowers the velocity of the gases passing through the catalyst, while maintaining similar space velocities, defined as the volumetric ratio between gas flow and the catalyst and reaction or residence time within the catalyst. This is true even though the actual catalyst bed depth is less, and is accompanied by a decrease in the resistance to the flow of the gases through the catalyst.

The stainless steel frame design, using diagonal channels for edge seal and support of the monolith, provides good structural integrity. The stainless sheet material is selected for its high creep strength at temperature and resistance to surface oxidation, enabling it to be reloaded and reused for subsequent catalyst service.

Since there is an exothermic reaction occurring on the catalyst when oxidizing the combustible vapors, the catalyst operates at a higher temperature than the gases passing through it. On the gas discharge side of the catalyst the opposing faces radiate heat toward each other while on the gas entry side, the radiation is reflected back from the bright surface of the stainless steel. The effect is to create a high radiant energy zone both before and after the catalyst. This promotes heat transfer, vaporization and oxidation of any particulates such as paint solids that may be present by exposing them at temperature for a longer period of time.

Entry side faces of the monolith catalyst elements are protected by a deflector plate. That portion of the fume stream that does not directly enter the high temperature catalyst entry zone, impinges on the deflector plate and is directed toward the catalyst entry. The deflected flow collides with the direct fume stream and particulate is directed toward the side wall of the frame. Residence time at high temperature is increased for the particulate and it is more likely to vaporize and burn rather than impinge upon and plug the monolith catalyst.

By increasing the catalyst face area which meets the incoming fume stream, there is an increase in the amount of catalyst surface area. This reduces the velocity of the flow entering the catalyst channels and the depth of the turbulent flow zone at the channel entry. The laminar flow zone in the channels is therefore lengthened and the potential for particulate contamination of the catalyst surface is reduced. Also, the increased surface area makes more available surface for the gaseous state fumes to contact in the monolith catalyst channels.

Effective performance will reach a flow limitation when the exit face included angle is below 20°. Similarly, radiation wiping of the entire entry and exit fume stream will reach diminishing returns at exit face included angles above 90°.

Accordingly, in its broadest embodiment this invention comprises a catalytic apparatus for decontaminating the process atmosphere in an oven for baking a surface applied coating. The apparatus comprises a housing having an inlet end which is substantially entirely open for receiving particulate laden fumes and combustible hydrocarbon solvents, and an outlet end.  The housing has mounted in it a pair of extruded, catalyst coated monolithic ceramic members.  These monolithic members have honeycomb channels therethrough and a cell density of at least 200 cells per square inch (0.31 cells per square millimeter).  The monolithic members are generally flat and of rectangular shape on their inlet and outlet surfaces and angularly mounted so that their outlet surfaces are at an included angle in the range of $20^{\circ}$ to $90^{\circ}$.  The monolithic members are disposed adjacent to each other at the inlet end of the housing and are considerably displaced from each other at the outlet end of the housing.  Deflector means for deflecting fumes entering the central area of the inlet end of the housing are located in the space between the inlet end portions of the monolithic members.  The fumes are directed into inlet plenum areas adjacent the inlet surfaces of the monolithic members and intersect with fumes passing axially of the housing inlet into said inlet plenum areas.  The inner walls of the housing defining the inlet plenum areas are of a heat reflective nature so as to reflect heat generated by the inlet surfaces of the monolithic members back against the surfaces. The inlet surfaces of each of the monolithic members have an included angle with an adjacent inner wall of the inlet plenum at their downstream ends which is about 50% of the aforesaid included angle between the outlet surfaces.

## BRIEF DESCRIPTION OF THE DRAWINGS

Fig. 1 is a partially broken away perspective view of the monolithic catalyst elements mounted in the housing; and

Fig. 2 is a cross-sectional view taken on line 2-2 of Fig. 1.

## DESCRIPTION OF THE PREFERRED EMBODIMENT

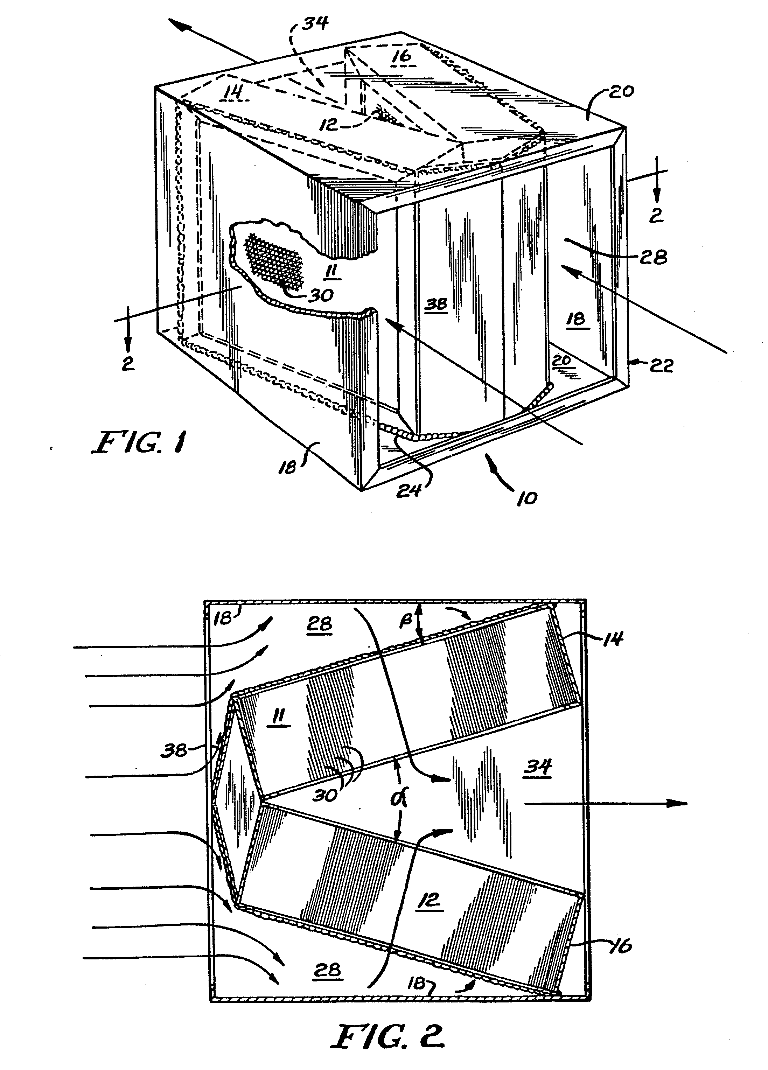

Referring to the drawings, the catalyst apparatus indicated generally at 10 includes a pair of monolithic catalyst impregnated elements 11, 12 which are mounted in channel-like frames 14, 16 which are welded to the side walls 18 and the top and bottom walls 20 of housing 22 by weld heads 24. The general direction of gas flow through the apparatus is indicated by the arrows in Fig. 1. In a general sense, the gases which are sucked through the apparatus 10 by a downstream fan (not shown) enter the inlet plenum 28, pass through the axial openings 30 in the monoliths 11, 12, and pass out of the outlet plenum 34. More specifically, as seen by the arrows in Fig. 2, the gases entering in the vicinity of the outside walls 18 tend to move in a relatively straight path. Those gases entering on the axis of the housing 22 impinge on the deflector surfaces 38 which are welded to the monolith frames 14, 16 and the surfaces 20. The deflected gases enter the plenum areas 28 and produce some turbulence in the gases which have entered parallel to the axis. The outward deflection of the gases tends to cause particulate matter therein, such as paint solids, to move outwardly toward the walls 18, thus increasing their residence time in the hot plenum 28 and increasing the chance that they will vaporize and burn. By destroying many of the particulates before they enter the relatively small diameter monolith channels 30, there are fewer particulates left to be treated by the catalyst in the monoliths or in the outlet plenum 34.

The monolith elements 11, 12 are shown in Fig. 2 as being positioned in a V-shaped configuration to form the outlet plenum 34 and the inlet plenums 28. The exit included angle $\alpha$ is shown as being 32° for the particular housing and monolith dimensions shown. However, other angles could be used which would be small enough to allow a radiant heat zone to be formed by heat reflected between the exit surfaces of the monoliths but not so small that the outward flow of gases would be unduly impeded. An angle range for $\alpha$ of $20°$ to $90°$ appears to be suitable. The angle $\beta$ in the inlet plenums is 50% of the angle $\alpha$. If this angle were too large, the gases would impinge directly on the ends of the channels and could produce plugging. Also, the radiant heat zone created in the inlet plenum between the hot monolith inlet surfaces and the stainless steel housing walls 18 would not be as effective in vaporizing particulates or hydrocarbon solvents before they reach the monoliths. The radiant heat zones formed in the plenums 28 and 34 are quite important in permitting monoliths having 200 or more openings 30 per square inch to be utilized (0.31 or more openings 30 per square millimeter). In a typical paint oven operation, the gases entering the plenum 28 are at a temperature of $650°$ to $850°F$ (340 to $430°$) while those leaving plenum 34 are at $800°$ to $1100°F$ ($430°C$ to $590°C$). An average entering and exiting temperature might be $750°F$ and $900°F$ ($400°C$ and $480°C$). The increase of course is produced by the burning off of the hydrocarbon solvents and particulates in the catalyst elements and in the inlet and outlet plenums.

The deflector plates 38 are shown to be mounted at an angle of about $14°$ to an imaginary plane drawn normal to the axis of the housing 22. To keep the housing depth to a minimum and still achieve effective mixing of the gases, the angle should be in the range of about $10°$ to $15°$.

WE CLAIM AS OUR INVENTION:

1. A catalytic apparatus for decontaminating the process atmosphere in an oven for baking a surface applied coating said apparatus comprising a housing having an inlet end which is substantially entirely open for receiving particulate laden fumes and combustible hydrocarbon solvents, and an outlet end; a pair of extruded, catalyst-coated monolithic ceramic members mounted in said housing, said monolithic members having honeycomb channels therethrough and a cell density of at least 200 cells per square inch (0.31 cells per square millimeter), said monolithic members being generally flat and of rectangular shape on their inlet and outlet surfaces and angularly mounted so that their outlet surfaces are at an included angle in the range of 20° to 90° and are disposed adjacent each other at the inlet end of the housing and considerably displaced from each other at the outlet end of the housing; deflector means for deflecting fumes entering the central area of the inlet end of the housing in the space between the inlet end portions of the monolithic members so said fumes are directed into inlet plenum areas adjacent the inlet surfaces of the monolithic members and intersect with fumes passing axially of the housing inlet into said inlet plenum areas, the inner walls of said housing defining said inlet plenum areas being of a heat reflective nature so as to reflect heat generated by the inlet surfaces of said monolithic members back against said surfaces, said inlet surfaces of each said monolithic members having an included angle with an ajacent inner wall of the inlet plenum at their downstream ends which is about 50% of the aforesaid included angle between the outlet surfaces.

2. A catalytic apparatus in accordance with Claim 1 wherein said monolithic members have a cell density of at least 300 cells per square inch (0.46 cells per square millimeter).

3. A catalytic apparatus in accordance with Claim 1 wherein said monolithic members have a cell density of at least 375 cells per square inch.(0.58 cells per square millimeter).

4. A catalytic apparatus in accordance with Claim 1 wherein the outlet surfaces of said monolithic members are at an included angle in the range of about 25° to 50°.

5. A catalytic apparatus in accordance with Claim 1 wherein the outlet surfaces of said monolithic members are at an included angle in the range of about 25° to 35°.

6. A catalytic apparatus in accordance with Claim 1 wherein said deflector means includes plate portions which are positioned at an included angle relative to an imaginary plane perpendicular to the axis of the inlet flow path of the fumes which is in the range of about 10° to 15°.

FIG. 1

FIG. 2

0106210

Application number

EP 83 10 9449

# EUROPEAN SEARCH REPORT

European Patent Office

## DOCUMENTS CONSIDERED TO BE RELEVANT

| Category | Citation of document with indication, where appropriate, of relevant passages | Relevant to claim |
|---|---|---|
| A | FR-A-2 198 536 (KNAPSACK AG) | |
| A | FR-A-2 422 029 (FUJI JUKOGYO K.K.) | |
| A | US-A-3 925 252 (TOZO YABUTA) | |

**CLASSIFICATION OF THE APPLICATION (Int. Cl. ³)**

B 01 D 53/36
F 27 D 17/00

**TECHNICAL FIELDS SEARCHED (Int. Cl. ³)**

B 01 D 53/00
F 27 D 17/00
F 01 N 3/00

The present search report has been drawn up for all claims

| Place of search | Date of completion of the search | Examiner |
|---|---|---|
| THE HAGUE | 13-01-1984 | BOGAERTS M.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document